# EUROPÄISCHE PATENTSCHRIFT

(11) **EP 0 766 655 B1**
(45) Veröffentlichungstag und Bekanntmachung des Hinweises auf die Patenterteilung: **23.12.1998**
(21) Anmeldenummer: 96914967.3
(22) Anmeldetag: 20.04.1996
(51) Int. Cl.: C04B 28/02, C04B 41/48

(54) **VERFAHREN ZUR HERSTELLUNG EINER ESTRICHSCHICHT**
METHOD OF PRODUCING A SCREED
PROCEDE DE FABRICATION D'UNE CHAPE

(30) Priorität: 21.04.1995 DE 19514820
(43) Veröffentlichungstag der Anmeldung: 09.04.1997
(73) Patentinhaber: HMW-Fugentechnik-Vertrieb Marianne Reher, 48282 Emsdetten (DE)
(72) Erfinder: WEDI, Marianne, D-48282 Emsdetten (DE)
(74) Vertreter: Hoffmeister, Helmut, Dr. Dipl.-Phys.
(86) Internationale Anmeldenummer: EP9601667
(87) Internationale Veröffentlichungsnummer: WO9633141

(56) Entgegenhaltungen:
- EP-A- 0 398 023
- DD-A- 66 279
- DE-A- 3 721 668
- DE-A- 4 203 571
- Bautechnik, nr.1, 1995, Seite 12
- Trockenbau, nr.1/2, 1995, Seiten 112-113

## Beschreibung

Die Erfindung betrifft ein Verfahren zur Herstellung einer Estrichschicht.

Um einen Trittschallschutz und eine Wärmedämmung bei Estrichen zu erhalten zu können, wird - wie bekannt - aus Recyclingstyropor sowie einem Gipsbindemittel ein Gemisch hergestellt und dieses Gemisch auf einer Rohdecke aufgegossen. Mit einer Abreibplatte wird die Oberfläche glattgezogen (vgl. BAUTECHNIK 1/95, S. 12 und TROCKENBAU, 1/2-95, S. 112 - 113).

Auch wenn das bekannte Gemisch schnell aushärtet und bereits nach Stunden begehbar ist, muß nachfolgend nach mehreren Tagen noch ein schwimmender Estrich aufgebracht werden, so daß hierdurch das Gemisch einen seiner wesentlichen Vorteile, nämlich seine Leichtigkeit verliert. Außerdem entstehen zusätzliche Wartezeiten wegen der Aushärtung des Estrichs. Bedingt durch das Bindemittel Gips verfügt die aus dem Gemisch aufgebrachte Schicht über unzureichende statische Eigenschaften. Außerdem besteht eine Beeinträchtigungsgefahr durch Feuchtigkeit ganz allgemein.

In der DE-A-4 203 571 wird ein Styropor-Leichtbeton zur Herstellung als Unterlags- oder Ausgleichsbeton unter Estrichen beschrieben. Ausgangsprodukte sind Zement und Styropor. Bei dem Styropor handelt es sich um Recycling-Styropor-Material und/oder um expandierbares Polystyrol (EPS), vorzugsweise in Gestalt von EPS-Recycling-Schrott oder EPS-Perlen. Der Mischung aus Zement, Sand und Styropor wird Wasser beigemischt.

Nachteilig ist, daß Leichtbeton und Styropor eingesetzt wird. Bei Styropor handelt es sich um einen expandierten Polystyrol-Hartschaum, der aus einer Vielzahl von Kugeln besteht. Bei einem Zerkleinern des Styropors können einzelne oder Gruppen von zusammenhängenden Kugeln entstehen, die dem Gemisch beigefügt werden. Hierdurch erhält der Leichtbeton eine unzureichende Festigkeit und muß mit einem Estrich überzogen werden.

Aus der EP-A-398 023 ist ein agglomeriertes Gefüge aus Kunststoff-Hartschaum-Körpern und einem zementgefüllten aushärtbaren Kunststoffmörtel bekannt. Allerdings wird dieses Gefüge nur dazu verwendet, um daraus Drainageelemente zur Ableitung von Feuchtigkeit herzustellen. Die aus dem ausgehärteten Mörtel gebildete Matrix mit einem Gefüge von Hohlkörpern, Kapillaren, Öffnungen und Höhlungen hat wasserspeichernde und wasserleitende Eigenschaften.

Es stellt sich demnach die Aufgabe, ausgehend von einer mit Wasser anrührbaren Mischung ein Verfahren zur Erstellung einer Estrichschicht zu finden, das sich insbesondere für einen Ausbau von Neu- und Altbauten eignet.

Erfindungsgemäß wird diese Aufgabe durch die Merkmale des Anspruchs 1 gelöst.

Überraschenderweise wurde festgestellt, daß das Gemisch, das bislang nur zur Herstellung von Drainageelementen verwendet wurde, sich für die Lösung der Erfindungsaufgabe eignet. Bedingt durch die Bestandteile des Ausgangsgemisches ist dieses insbesondere bei der integrierten Sanierung von Altbauten geeignet.

Die mit der Erfindung erzielten Vorteile bestehen insbesondere darin, daß nach dem Aushärten des Gemisches ein Baukörper entsteht, der die Festigkeit herkömmlicher Estriche hat. Die Höhe des Estrichaufbaus verringert sich darüber hinaus auf 50% von herkömmlichen Estrichaufbauten mit einer zusätzlichen Trittschalldämmung. Das niedrige Raumgewicht, die Wärme- und Schalldämmung werden durch den hohen Anteil an Kunststoff-Hartschaum-Körpern gewährleistet. Hier wurde überraschenderweise gefunden, daß rhomboidförmig ausgebildete Kunststoff-Hartschaum-Körper mit einem Außendurchmesser (Siebdurchmesser) zwischen 0,5 und 50 mm, vorzugsweise 8 mm, die statischen Eigenschaften des Gemisches positiv beeinflussen. Die Kunststoff-Hartschaum-Körper bilden eine offene Matrix mit dem sie umgebenden und untereinander verbindenden erhärteten Bindemittel aus, die von außen auftretende Kräfte sehr gut aufnehmen kann. Durch die "Rhombus-Matrix" hat der entstehende Estrich trotz seiner Leichtigkeit Festigkeitseigenschaften, die denen von gewöhnlichem Estrichbeton nicht nur entsprechen, sondern sie sogar übersteigen. Durch die Ausbildung der Kunststoff-Hartschaum-Körper wird eine hohe Haftfläche für den Kunstharzmörtel bereitgestellt. Der Kunstharzmörtel erhält so die Möglichkeit, sich auch bei Entstehen von Hohlräumen innerhalb der Matrix fest mit der Oberfläche der Kunststoff-Hartschaum-Körper zu verbinden.

Bedingt durch die rauhe Oberfläche bzw. Oberflächenvergrößerung werden die Haftungswerte des fertigen Estrichs bei einer Verklebung vervielfacht. Von besonderem Vorteil ist es, daß eine punktweise Verklebung ausreichend ist, so daß bis 70% Klebemittel eingespart werden können.

Die Festigkeit des ausgehärteten Estriches kann auch dadurch verbessert werden, daß dem zementgefüllten Kunststoffmörtel übliche Zuschläge, insbesondere Sand oder Kies mit einer Korngröße zwischen 0,01 bis 30 mm, beigefügt werden.

Je nach den Einsatzeigenschaften kann der Anteil an Zement, Kalkzement und/oder Kalk an dem Kunstharz-Mörtel zwischen 10 und 80 %, vorzugsweise 30 %, und der Kunststoffanteil zwischen 5 und 90 %, vorzugsweise 70 % betragen. Die Erfindung wird nachstehend anhand der Zeichnung näher erläutert. Es zeigen:
- Fig. 1: einen Ausschnitt aus einem nach dem Verfahren hergestellten Estrich in einer schematischen Darstellung,
- Fig. 2: eine vergrößerte Darstellung der Struktur eines Kunststoff-Hartschaumes, der in Form von Kunststoff-Hartschaum-Körpern Teil eines Gemisches gemäß Fig. 1 ist,
- Fig. 3: eine Sanierung eines Raumes eines Altbaues mit Hilfe eines Gemisches gemäß Fig. 1a bis 1c in einer schematischen perspektivischen Darstellung,
- Fig. 4: eine Estrichschicht mit einer aufliegender Epoxydharz-Quarzschicht.

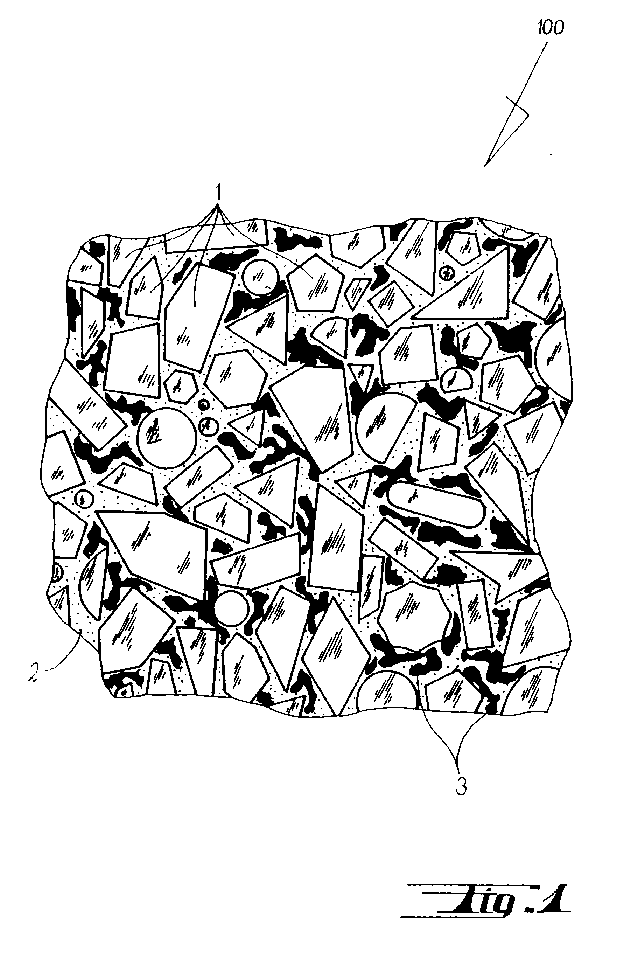

In Fig. 1 ist ein ausgehärteter Estrich 100 in einer vergrößerten Darstellung gezeigt. Er besteht aus Kunststoff-Hartschaum-Körpern 1 und einem zementgefüllten, ausgehärteten Kunstharzmörtel 2, die eine durch zahlreiche Hohlräume 3 unterbrochene Matrix bilden.

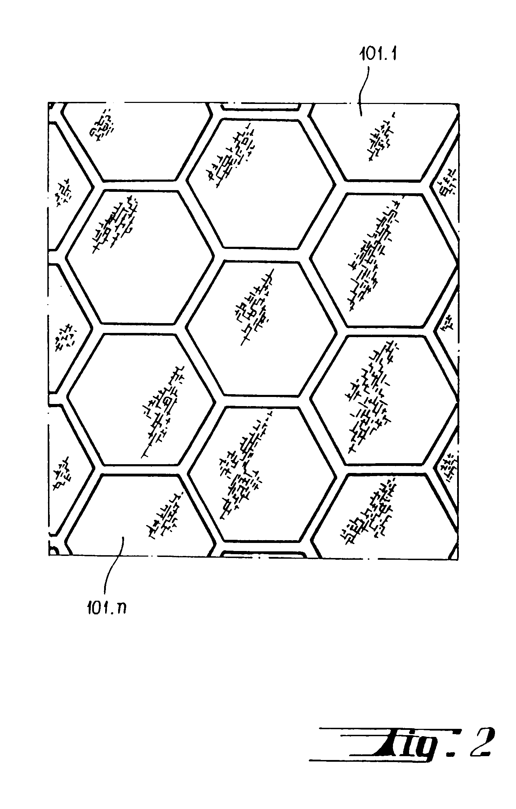

In vergrößerter Form ist in Fig.2 dargestellt, daß es sich bei dem Kunststoff-Hartschaum um einen solchen handelt, der eine wabenähnliche, geschlossenzellige Struktur mit Zellen 101.1, ..., 101.n hat. Hierdurch ergeben sich folgende hervorragende Eigenschaften:
- hohe Druckfestigkeit,
- hohe Feuchtigkeits- und Dampfbeständigkeit,
- konstant niedrige Wärmeleitfähigkeit,
- ausgezeichnete Scherfestigkeit,
- hohe Zugfestigkeit,
- optimale Klebeoberfläche, dadurch hoher Haftzugverbund,
   - geringes Gewicht,
   - homogene Dichte,
   - geringe Dickentoleranzen,
   - einfache Verarbeitung.

Die aus den Zellen gemäß Fig. 2 gebildeten Kunststoff-Hartschaum-Körper 1 können unterschiedliche Konfigurationen haben. Ihr Außendurchmesser (Siebdurchmesser) liegt zwischen 0,5 und 50 mm. Als vorteilhaft hat es sich erwiesen, gemahlene, d.h. granulierte,- rhomboidförmige Kunststoff-Hartschaum-Körper 1 einzusetzen, die einen Außendurchmesser (Siebdurchmesser) von etwa 8 mm haben. Durch die "diamantförmigen" Kunststoff-Hartschaum-Körper 1 bildet sich nach dem Aushärten des zementgefüllten Kunstharzmörtels 2 eine luftdurchlässige Matrix heraus. Hierdurch besitzt der Estrich 100 eine hohe Stabilität, ein geringes Gewicht sowie hervorragende Wärme- und Schalldämmumg sowie Feuchtigkeitsableitfähigkeit.

Im Ergebnis umfangreicher Versuche wurde folgende Zusammensetzungen des Ausgangsgemisches als vorteilhaft gefunden:

| Volumenanteile (in Vol.-%) | Komponente |
|---|---|
| 50 - 90 | Kunststoff-Hartschaum-Körper (granuliert) |
| | |
| 10 - 50 | Kunstharzmörtel (Pulverkomponente) |
| | |
| Hinzugefügt werden je nach Einsatzfall wahlweise: | |
| 10 - 50 | Sandzuschläge |
| 10 - 50 | Blähbetonzuschläge |
| 10 - 50 | Gasbetonbruchzuschläge |
| 10 - 50 | Vermiculitzuschläge |

Der Kunstharzmörtel, d.h. die Pulverkomponente, setzt sich wie folgt zusammen:

| Volumenteile (in Vol.-%) | Komponente |
|---|---|
| 40 - 95 | hydraulisches Bindemittel |
| 0 - 50 | latent hydraulisches Bindemittel |
| 0 - 20 | Füllstoff |
| 0,1- 5 | Hydrophobiermittel |
| 0 - 10 | Silicat |
| 0 - 10 | Dispersionspulver |
| 0 - 5 | Verflüssiger |
| 0 - 3 | Stabilisator |
| | |
| Hinzugefügt werden je nach Einsatzfall wahlweise: | |
| | |
| 0 - 5 | Reaktionsverzögerer |
| 0 - 5 | Abbindebeschleuniger |
| 0 - 3 | Verdickungsmittel |
| 0 - 5 | Schaumbildner |

Für eine Verarbeitung auf einer Baustelle können die Kunststoff-Hartschaum-Körper 1 aus Polystyrol oder dergleichen und der zementgefüllte aushärtbare Kunststoffmörtel 2 in getrennten Säcken angeliefert werden. In einem einfachen Mischer wird unter Zusatz von Wasser ein Gemisch hergestellt, das zu 50 - 90 % aus den Kunststoff-Hartschaum-Körpern 1 und dem Rest aus dem zementgefüllten Kunstharzmörtel 2 besteht.

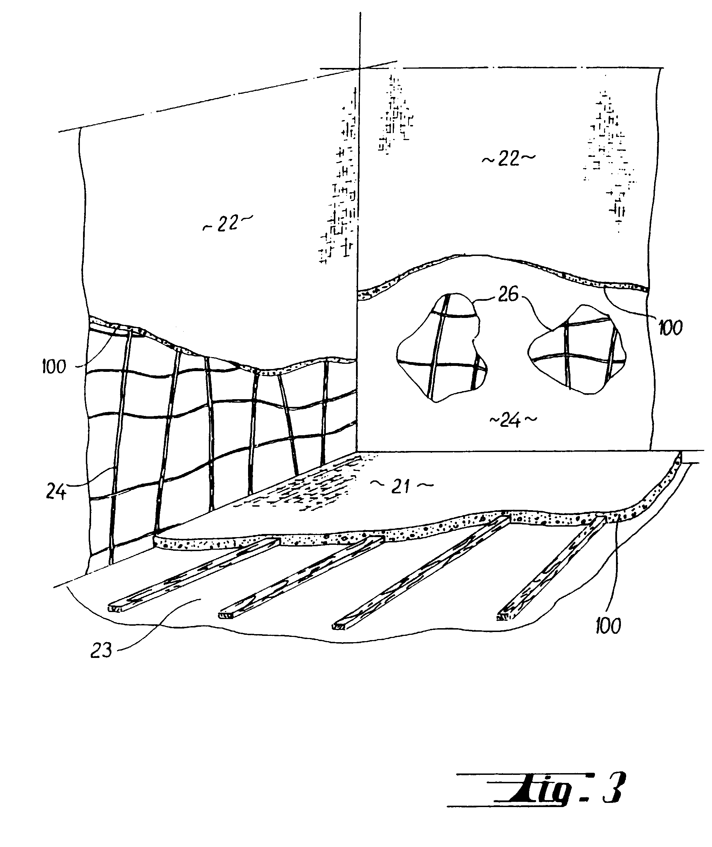

Um einen Raum eines Altbaues gemäß Fig. 3 zu sanieren, wird zuerst ein Alt-Fußboden 23 mit einem Fußboden-Estrich 100 aus einem flüssigen Gemisch 21 überzogen. Dabei werden die Dielen o.dgl. des Alt-Fußbodens gleichmäßig überdeckt. An einer Alt-Wandfläche 24 kann gleichfalls ein Wand-Estrich 22 aus dem Gemisch 21 aufgebracht werden. Hierbei werden freiliegende Geflechte 24 oder Putzabplatzungen 26 zusammengehalten oder ausgefüllt.

Nach dem Glattstreichen des Estriches in bekannter Art entstehen glatte Oberflächen. Durch das Glattstreichen bzw. Abziehen des Fußboden- bzw. Wand-Estrichs glättet sich hauptsächlich der Kunststoffmörtel und es entsteht eine glatte Oberfläche trotz des vorhandenen Schaumstoff-Granulates. Mit dem Fußboden-Estrich 100 bzw. dem Wand-Estrich 22 wird der Raum allseitig hervorragend wärmeisoliert.

Nach dem Aushärten kann der Fußboden-Estrich 100 mit Parkett, Fußbodenbelag oder dergleichen belegt werden. Hervorzuheben ist, daß eine punktweise Verklebung ausreichend ist, so daß bis 70% Klebemittel eingespart werden können. Der fertige, ausgehärtete Wand-Estrich 22 kann in bekannter Art tapeziert oder gestrichen werden.

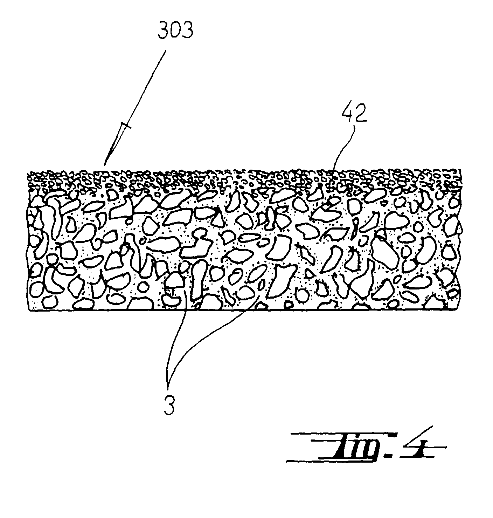

In Fig. 4 ist ein Estrich 303 dargestellt, bei dem als oberste Schicht eine Quarz-Epoxydharzschicht 42 aufgebracht ist. Die Quarz-Epoxydharzschicht 42 besteht zu 10 - 70 Gew.-%, vorzugsweise 30 Gew.-%, aus Epoxydharz und zu 30 bis 90 Gew.-%, vorzugsweise 70 Gew.-% aus Quarz, vorzugsweise koloriertem Quarz. Die Quarz-Epoxydharzschicht 42 hat nach dem Aufbringen und dem Aushärten des Epoxydharzes ein äußeres Aussehen bzw. eine gleiche Funktion wie eine gebrannte Oberfläche einer Fliese, Naturstein, Naturholz o.dgl.

## Patentansprüche

1. Verfahren zur Herstellung einer Estrichschicht unter Verwendung eines mit Wasser zu einer schüttfähigen, glattstreichbaren Estrichmasse angerührten Gemisches, das aus 50 bis 90 Vol.-% rhomboidförmig ausgebildetem Polystyrol-Kunststoff-Hartschaum-Granulat (1) mit einem Körnungsdurchmesser zwischen 0,5 und 50 mm und 10 bis 50 Vol.-% Kunstharzmörtel (2) besteht, wobei die Masse auf einen Fußboden (23) und/oder eine Wand (24) aufgebracht und glattgestrichen wird und zu einer fluiddurchlässigen Estrichschicht aushärtet.

2. Verfahren nach Anspruch 1, dadurch gekennzeichnet, daß dem Gemisch wahlweise hinzufügbar sind:
- 10 bis 50 Vol.-% Sandzuschläge,
- 10 bis 50 Vol.-% Blähbetonzuschläge,
- 10 bis 50 Vol.-% Gasbetonbruchzuschläge,
- 10 bis 50 Vol.-% Vermiculitzuschläge.

3. Verfahren nach Anspruch 1 oder 2, dadurch gekennzeichnet, daß der Kunstharzmörtel (2) zu 10 bis 80 Gew.-%, vorzugsweise 30 Gew.% aus Zement, Kalkzement und/oder Kalk, und zu 5 bis 90 Gew.-%, vorzugsweise 70 Gew.-% aus Kunststoff-Anteilen besteht.

4. Verfahren nach Anspruch 1 oder 2, dadurch gekennzeichnet, daß der Kunstharzmörtel (2) sich wie folgt zusammensetzt:
- 40 - 95 Vol.-% hydraulisches Bindemittel,
- 0 - 50 Vol.-% latent hydraulisches Bindemittel,
- 0 - 20 Vol.-% Füllstoff,
- 0,1- 5 Vol.-% Hydrophobiermittel,
- 0 - 10 Vol.-% Silicat (Sand oder Kies),
- 0 - 10 Vol.-% Dispersionspulver,
- 0 - 5 Vol.-% Verflüssiger,
- 0 - 3 Vol.-% Stabilsator.

5. Verfahren nach einem der Ansprüche 1 bis 4, dadurch gekennzeichnet, daß je nach Einsatzfall der Zusammensetzung des Kunstharzmörtels (2) wahlweise hinzufügbar ist:
- 0 - 5 Vol.-% Reaktionsverzögerer,
- 0 - 5 Vol.-% Abbindebeschleuniger,
- 0 - 3 Vol.-% Verdickungsmittel,
- 0 - 5 Vol.-% Schaumbildner.

6. Verfahren nach einem der Ansprüche 1 bis 5, dadurch gekennzeichnet, daß der dem Kunstharzmörtel beigemischte Sand oder Kies eine Korngröße zwischen 0,01 bis 30 mm hat.

7. Verfahren nach einem der Ansprüche 1 bis 6, dadurch gekennzeichnet, daß die oberste Schicht des Estriches eine Quarz-Epoxydharzschicht (42) ist.

## Claims

1. A method of producing a screed layer using a mixture which can be mixed with water to form a pourable smoothable screed substance comprising 50 to 90% by volume of rhomboidal polystyrene and high-resistance plastic foam granulate (1) having a particle diameter between 0.5 and 50 mm and 10 to 50% by volume of synthetic resin mortar (2), wherein the substance is applied to a floor (23) and/or wall (24) and smoothed and sets to form a screed layer permeable to fluid.

2. A method according to claim 1, characterised in that the following are optionally added to the mixture:
- 10 to 50 vol.% sand aggregates,
- 10 to 50 vol.% expanded concrete aggregates,
- 10 to 50 vol.% gas concrete rubble aggregates and
- 10 to 50 vol.% vermiculite aggregates.

3. A method according to claim 1 or 2, characterised in that the synthetic resin mortar (2) comprises 10 to 80 wt.%, preferably 30 wt.% cement, lime cement and/or lime and 5 to 90 wt.%, preferably 70 wt.% plastic components.

4. A method according to claim 1 or 2, characterised in that the synthetic resin mortar (2) is made up as follows:
- 40 - 95 vol.% hydraulic binder,
- 0 - 50 vol.% latent hydraulic binder,
- 0 - 20 vol.% filler,
- 0.1 - 5 vol.% waterproofing agent,
- 0 - 10 vol.% silicate (sand or gravel),
- 0 - 10 vol.% dispersion powder,
- 0 - 5 vol.% liquefier and
- 0 - 3 vol.% stabiliser.

5. A method according to any of claims 1 to 4, characterised in that depending on the application, the following are optionally added to the synthetic resin mortar composition (2):
- 0 - 5 vol.% reaction retarder,
- 0 - 5 vol.% setting accelerator,
- 0 - 3 vol.% thickener and
- 0 - 5 vol.% foaming agent.

6. A method according to any of claims 1 to 5, characterised in that the sand or gravel mixed with the synthetic resin mortar has a particle size between 0.01 and 30 mm.

7. A method according to any of claims 1 to 6, characterised in that the top layer of the screed is a quartz and epoxy resin layer (42).

## Revendications

1. Procédé de fabrication d'une chape en utilisant un mélange qui est préparé avec de l'eau en agitant pour former une masse de chape susceptible d'être coulée et d'être lissée et qui est composé de 50 à 90% en volume d'un granulat (1) de mousses de matière plastique à haute résistance de polystyrène à structure rhomboïde, à diamètre de granule compris entre 0,5 et 50 mm, et de 10 à 50% en volume de mortier (2) de résine synthétique, la masse étant appliquée et lissée sur un sol (23) et/ou une paroi (24) et durcissant pour former une chape perméable aux fluides.

2. Procédé selon la revendication 1, caractérisé en ce qu'il est possible d'ajouter à volonté au mélange:
- 10 à 50% en volume d'agrégats sableux,
- 10 à 50% en volume d'agrégats de béton expansé,
- 10 à 50% en volume d'agrégats de béton cellulaire autoclavé broyé,
- 10 à 50% en volume d'agrégats de vermiculite.

3. Procédé selon la revendication 1 ou 2, caractérisé en ce que le mortier (2) de résine synthétique se compose de 10 à 80% en poids, de préférence de 30% en poids, de ciment, de ciment allongé à la chaux et/ou de chaux et d'une proportion de 5 à 90% en poids, de préférence 70% en poids, de matières plastiques.

4. Procédé selon la revendication 1 ou 2, caractérisé en ce que la composition du mortier (2) de résine synthétique est la suivante:
- 40 à 95% en volume de liant hydraulique,
- 0 à 50% en volume de liant hydraulique latent,
- 0 à 20% en volume de charge,
- 0,1 à 5% en volume d'agent hydrophobe,
- 0 à 10% en volume de silicate (sable ou silice),
- 0 à 10% en volume de poudre de dispersion,
- 0 à 5% en volume de fluidifiant,
- 0 à 3% en volume de stabilisant.

5. Procédé selon l'une des revendications 1 à 4, caractérisé en ce qu'il est possible d'ajouter au choix, selon le cas d'emploi de la composition du mortier (2) de résine synthétique:
- 0 à 5% en volume de retardateur de réaction
- 0 à 5% en volume d'accélérateur de prise
- 0 à 3% en volume d'agent de gonflement
- 0 à 5% en volume d'agent moussant.

6. Procédé selon l'une des revendications 1 à 5, caractérisé en ce que le sable ou la silice ajoutés par mélange au mortier de résine synthétique est d'une granulométrie comprise entre 0,01 et 30 mm.

7. Procédé selon l'une des revendications 1 à 6, caractérisé en ce que la couche supérieure de la chape est une couche de quartz-résine époxyde (42).
